# EUROPEAN PATENT APPLICATION

(11) **EP 2 886 410 A1**
(43) Date of publication of application: **24.06.2015**
(21) Application number: 13197911.4
(22) Date of filing: 18.12.2013
(51) Int. Cl.: B60W 30/14, B60W 30/16, B60W 50/00

(54) **Vehicle velocity control arrangement**

(71) Applicant: Volvo Car Corporation, 40531 Göteborg (SE)
(72) Inventor: Israelsson, Erik, 41663 Göteborg (SE); Lind, Henrik, 42339 Torslanda (SE)
(74) Representative: Kraenzmer, Martin

(57) **Abstract**

A vehicle velocity control arrangement (1) is provided configured to control vehicle velocity of a host vehicle (3). The arrangement (1) comprises a processing unit (11) arranged to compare a position of the host vehicle (3) with data representative of geographical road segments (4.1-4.4) comprised in a database (9.1, 9.2) to determine from the database (9.1, 9.2) a current geographical road segment (4.1). The processing unit (11) further is arranged to process historic vehicle velocity profiles associated with the current geographical road segment (4.1) to generate a host vehicle velocity control signal therefrom. The vehicle velocity control arrangement (1) further comprises a vehicle velocity regulator (13) arranged to regulate vehicle velocity of the host vehicle (3) using the generated host vehicle velocity control signal. The present invention also relates to a vehicle (3) comprising a vehicle velocity control arrangement (1) and a method of controlling vehicle velocity of a host vehicle (3) using a vehicle velocity control arrangement (1).

## Description

### TECHNICAL FIELD

The present invention relates to a vehicle velocity control arrangement. The present invention also relates to a vehicle comprising a vehicle velocity control arrangement and a method of controlling vehicle velocity of a host vehicle.

### BACKGROUND

Vehicle velocity control arrangements such as cruise control arrangements have been available for sales in automobiles for a long time. In fact, as early as the 1910s a centrifugal governor was used in automobiles to control the velocity thereof. Modern cruise control arrangements are configured to control vehicle velocity such that it matches a set speed given by a driver. Also, Adaptive Cruise Control (ACC) arrangements have been available for a time. Such arrangements are configured to control the velocity of a vehicle such that a safe distance is maintained to a preceding vehicle. Such control is based on sensor input from on-board sensors such as RADAR (RAdio Detection And Ranging) or LASER (Light Amplification by Stimulated Emission of Radiation) sensors, allowing the vehicle to slow down when approaching another vehicle ahead and accelerate again to the a pre-set speed when traffic allows. ACC technology can be regarded as a key component in future generations of cars and has an impact on driver safety as well as on the economising capacity.

However, both modern cruise control arrangements and ACC-arrangements fail to control host vehicle velocity to match a safe and/or pleasant vehicle velocity in many driving situations. As a result, vehicle drivers have to manually control host vehicle velocity in such driving situations. Examples of such driving situations are driving on curved or hilly road, city driving, driving on a road comprising road bumps, roundabouts, intersections etc. Ideally, a vehicle velocity control arrangement would be able to "read the drivers mind" to continuously control speed to match the speed profile that the driver would prefer and/or be able to regulate vehicle velocity such that it matches a current driving situation.

Thus, in view of the above, there is a need for a vehicle control arrangement with an improved ability to regulate host vehicle velocity to match an intention of a vehicle driver or match a driving situation.

### SUMMARY

An object of the present invention is to provide a vehicle control arrangement with an improved ability to regulate host vehicle velocity to match a driving situation.

According to an aspect of the invention, the object is achieved by a vehicle velocity control arrangement configured to control vehicle velocity of a host vehicle comprising a position generating unit arranged to generate a position signal indicating an estimated position of the host vehicle on a road, a database comprising data representative of a plurality of historic vehicle velocity profiles associated with respective geographical segments of the road, a processing unit arranged to compare the position signal with the data representative of the geographical road segments to determine from the database a current geographical road segment and to process the historic vehicle velocity profiles associated with the current geographical road segment to generate a host vehicle velocity control signal therefrom, and a vehicle velocity regulator arranged to regulate vehicle velocity of the host vehicle using the generated host vehicle velocity control signal.

Since the processing unit is arranged to process the historic vehicle velocity profiles associated with the current geographical road segment to generate a host vehicle velocity control signal therefrom, the generated host vehicle velocity control signal will be generated on the basis of the historic vehicle velocity profiles associated with the current geographical road segment. Since the vehicle velocity regulator is arranged to regulate vehicle velocity of the host vehicle using the generated host vehicle velocity control signal, a vehicle control arrangement is provided having an improved ability to regulate host vehicle velocity to match a driving situation.

As a result, the above mentioned object is achieved.

Further, since the host vehicle velocity control signal is generated on the basis of the historic vehicle velocity profiles, a vehicle velocity control arrangement is provided with improved ability to regulate host vehicle velocity to match an intention of a vehicle driver.

Even further, since the host vehicle velocity control signal is generated on the basis of the historic vehicle velocity profiles, a vehicle velocity control arrangement is provided with improved ability to regulate host vehicle velocity to match a safe vehicle velocity.

Even further, since the host vehicle velocity control signal is generated on the basis of the historic vehicle velocity profiles, a vehicle velocity control arrangement is provided with improved ability to regulate host vehicle velocity in a city environment.

According to some embodiments, the processing unit further is arranged to calculate a weighted average of the historic velocity profiles associated with the current geographical road segment and generate a host vehicle velocity control signal representative of said calculated weighted average. In such embodiments, since a host vehicle velocity control signal is generated by calculating a weighted average of the historic velocity profiles associated with the current geographical road segment, a vehicle control arrangement is provided having an improved ability to regulate host vehicle velocity to match a driving situation, to match an intention of a vehicle driver, and to match a safe vehicle velocity.

According to some embodiments, the processing unit further is arranged to select a subset of the historic velocity profiles associated with the current geographical road segment and generate a host vehicle velocity control signal representative of said selected subset. In such embodiments, since a host vehicle velocity control signal is generated by calculating a selected subset of the historic velocity profiles associated with the current geographical road segment, a vehicle control arrangement is provided having an improved ability to regulate host vehicle velocity to match a driving situation, to match an intention of a vehicle driver, and to match a safe vehicle velocity.

According to some embodiments, the database further comprises additional information associated with the respective historic vehicle velocity profiles, comprising at least one of a time of day, time of year, weather conditions, illumination condition, vehicle tire to road friction values, and the processing unit further is arranged to select a subset based on said additional information. In such embodiments, since the processing unit further is arranged to select a subset based on said additional information, a vehicle control arrangement is provided having an improved ability to regulate host vehicle velocity to match a driving situation, to match an intention of a vehicle driver, and to match a safe vehicle velocity.

According to some embodiments, the vehicle velocity control arrangement further comprises a vehicle velocity generating unit arranged to generate velocity data representative of a current vehicle velocity of the host vehicle, where the vehicle velocity regulator has an active state in which the vehicle velocity regulator regulates vehicle velocity of the host vehicle using the generated host vehicle velocity control signal and an inactive state in which no regulation is performed, and where the processing unit further is arranged to save the velocity data and an estimated position of the host vehicle to the database when the vehicle velocity regulator is in the inactive state. In such embodiments, since the processing unit further is arranged to save the velocity data and an estimated position of the host vehicle to the database when the vehicle velocity regulator is in the inactive state, the database will be continuously updated with vehicle velocity profiles when the vehicle velocity of the host vehicle is regulated by a human driver. Thereby, at a subsequent event, the vehicle velocity control arrangement of the host vehicle and/or another vehicle hosting a velocity control arrangement is provided having an improved ability to regulate host vehicle velocity to match a driving situation, to match an intention of a vehicle driver, and/or to match a safe vehicle velocity.

According to some embodiments, the vehicle velocity control arrangement further comprises a clock unit arranged to generate time data representative of a current time and where the processing unit further is arranged to save the generated time data together with the velocity data and the estimated position of the host vehicle. In such embodiments, since the processing unit further is arranged to save the generated time data, at a subsequent event, the time data may be used by a processing unit in the selection of a subset of the historic velocity profiles of vehicle velocity control arrangement hosted in the host vehicle and/or another vehicle. Thereby, a velocity control arrangement is provided having an improved ability to regulate host vehicle velocity to match a driving situation, to match an intention of a vehicle driver, and/or to match a safe vehicle velocity.

According to some embodiments, the vehicle velocity control arrangement further comprises an environmental data generating unit arranged to generate environmental data representative of at least one of a current weather condition a current illumination condition and current host vehicle tire to road friction values and where the processing unit further is arranged to save the environmental data together with the velocity data and the estimated position of the host vehicle. In such embodiments, since the processing unit further is arranged to save the environmental data, at a subsequent event, the environmental data may be used by a processing unit in the selection of a subset of the historic velocity profiles of a vehicle velocity control arrangement hosted in the host vehicle and/or another vehicle. Thereby, a vehicle velocity control arrangement is provided having an improved ability to regulate host vehicle velocity to match a driving situation, to match an intention of a vehicle driver, and/or to match a safe vehicle velocity.

According to some embodiments, the vehicle velocity control arrangement further comprises an adaptive cruise control arrangement comprising a distance measuring unit arranged to measure a distance to a preceding vehicle where the adaptive cruise control arrangement is arranged to generate a first velocity value on the basis of at least the measured a distance, where the processing unit further is arranged to process the historic velocity profiles associated with the current geographical road segment and to generate a second velocity value therefrom, and where the processing unit is arranged to compare the generated first and second velocity values to determine the lowest of the first and the second velocity values and to generate the host vehicle velocity control signal therefrom. In such embodiments, since the vehicle velocity regulator is arranged to regulate vehicle velocity of the host vehicle using the generated host vehicle velocity control signal, and in these embodiments, the host vehicle velocity control signal is generated using the lowest of the first and the second velocity values, host vehicle velocity will be regulated to match a measured distance to a preceding vehicle or to match historic vehicle velocity profiles. Thereby, a vehicle velocity control arrangement is provided having an improved ability to regulate host vehicle velocity to match a driving situation, to match an intention of a vehicle driver, and/or to match a safe vehicle velocity.

According to some embodiments, the database is arranged in the host vehicle. In such embodiments, since the database is arranged in the host vehicle, an arrangement is provided capable of utilizing data representative of a plurality of historic vehicle velocity profiles associated with respective geographical segments even in areas where data-communication with an external database is impossible.

According to some embodiments, the vehicle velocity control arrangement further comprises a communication unit and where the database is arranged external to the host vehicle and where the communication unit is arranged to communicate with the external database. In such embodiments, since the database is arranged external to the host vehicle and the communication unit is arranged to communicate with the external database, such a database may be continuously updated with vehicle velocity profiles from a plurality of vehicles each comprising the vehicle velocity control arrangement. Thereby, changes in a driving environment will be reflected in the data representative of a plurality of historic vehicle velocity profiles comprised in such a database. Thereby, vehicle velocity control arrangements using data from such a database will have an improved ability to regulate host vehicle velocity to match a driving situation, to match an intention of a vehicle driver, and/or to match a safe vehicle velocity.

According to an aspect of the invention, the object is achieved by a vehicle comprising a vehicle velocity control arrangement according to some embodiments.

Since the vehicle velocity regulator of such a vehicle velocity control arrangement is arranged to regulate vehicle velocity of the host vehicle using the generated host vehicle velocity control signal, a vehicle comprising a vehicle control arrangement is provided having an improved ability to regulate host vehicle velocity to match a driving situation.

As a result, the above mentioned object is achieved.

According to an aspect of the invention, the object is achieved by a method of controlling vehicle velocity of a host vehicle using a vehicle velocity control arrangement comprising a position generating unit, a database comprising data representative of a plurality of historic vehicle velocity profiles associated with respective geographical segments of a road, a processing unit, and a vehicle velocity regulator, the method comprising;
- generating a position signal indicating an estimated position of the host vehicle on the road, using the position generating unit, and
- comparing the position signal with the data representative of the geographical road segments to determine from the database a current geographical road segment, and
- processing the historic velocity profiles associated with the current geographical road segment to generate a host vehicle velocity control signal therefrom, using the processing unit, and
- regulating vehicle velocity of the host vehicle using the host vehicle velocity regulator using the generated host vehicle velocity control signal.

Again, since the method comprises processing the historic velocity profiles associated with the current geographical road segment to generate a host vehicle velocity control signal therefrom, the generated host vehicle velocity control signal will be generated on the basis of the historic vehicle velocity profiles associated with the current geographical road segment. Since the method further comprises regulating the host vehicle velocity using the host vehicle velocity regulator using the generated host vehicle velocity control signal a method is provided having an improved ability to regulate host vehicle velocity to match a driving situation.

Further, since the host vehicle velocity control signal is generated on the basis of the historic vehicle velocity profiles, a method is provided with improved ability to regulate host vehicle velocity to match an intention of a vehicle driver.

Even further, since the host vehicle velocity control signal is generated on the basis of the historic vehicle velocity profiles, a method is provided with improved ability to regulate host vehicle velocity to match a safe vehicle velocity.

Even further, since the host vehicle velocity control signal is generated on the basis of the historic vehicle velocity profiles, a method is provided with improved ability to regulate host vehicle velocity in a city environment.

Further features of, and advantages with, the present invention will become apparent when studying the appended claims and the following detailed description. Those skilled in the art will realize that the different features described may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Fig. 1 illustrates a vehicle velocity control arrangement 1 configured to control vehicle velocity of a host vehicle 3, and
Fig. 2 illustrates a method of controlling vehicle velocity of a host vehicle using a vehicle velocity control arrangement.

### DETAILED DESCRIPTION

Embodiments herein will now be described more fully with reference to the accompanying drawings, in which embodiments are shown. Disclosed features of embodiments may be combined as readily understood by one of ordinary skill in the art. Like numbers refer to like elements throughout.

Well-known functions or constructions will not necessarily be described in detail for brevity and/or clarity.

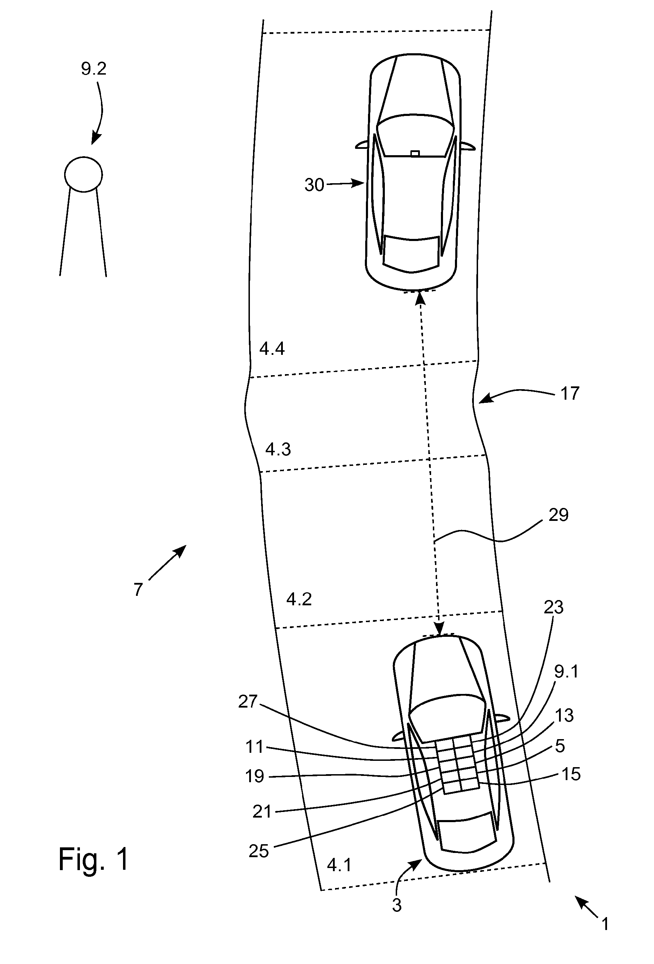

Fig. 1 illustrates a vehicle velocity control arrangement 1 configured to control the velocity of a host vehicle 3. The vehicle velocity control arrangement 1 comprises a position generating unit 5 arranged to generate a position signal indicating an estimated position of the host vehicle 3 on a road 7. The vehicle velocity control arrangement 1 further comprises a database 9.1, 9.2 comprising data representative of a plurality of historic vehicle velocity profiles associated with respective geographical segments 4.1-4.4 of the road 7. The vehicle velocity control arrangement 1 further comprises a processing unit 11 arranged to compare the position signal with the data representative of the geographical road segments 4.1-4.4 to determine from the database 9.1, 9.2 a current geographical road segment 4.1. The processing unit 11 is further arranged to process the historic vehicle velocity profiles associated with the current geographical road segment 4.1 to generate a host vehicle velocity control signal therefrom. The vehicle velocity control arrangement 1 further comprises a vehicle velocity regulator 13 arranged to regulate vehicle velocity of the host vehicle 3 using the generated host vehicle velocity control signal.

The position generating unit 5 may comprise a space based satellite navigation system such as a Global Positioning System (GPS), The Russian GLObal NAvigation Satellite System (GLONASS), European Union Galileo positioning system, Chinese Compass navigation system, or Indian Regional Navigational Satellite System.

The host vehicle 3 is a wheeled vehicle such as an automobile, a lorry, a truck, a bus, or the like.

A historic vehicle velocity profile may be a historic vehicle velocity profile of a vehicle on an associated geographical segment 4.1-4.4 of the road 7 or may be a historic vehicle velocity value of a vehicle on an associated geographical segment 4.1-4.4 of the road 7.

According to some embodiments, the database 9.1 is arranged in the host vehicle 3. As an alternative, or in combination, the database 9.2 is arranged external to the host vehicle 3. In embodiments where the database 9.2 is arranged external to the host vehicle 3, the vehicle velocity control arrangement 1 comprises a communication unit 15 arranged to communicate with the external database 9.2. Thus, such an external database 9.2 comprises means for storing a plurality of historic vehicle velocity profiles associated with respective geographical segments 4.1-4.4 of the road 7 and means for communicating with communication unit 15. The external database 9.2 may form part of a so called cloud. Such a cloud may be a cloud computing network where said external database 9.2 forms part of the cloud computing network.

According to some embodiments, the vehicle velocity control arrangement 1 comprises at least two databases 9.1, 9.2 where a first database 9.1 is arranged in the host vehicle 3 and a second database 9.2 is arranged external to the host vehicle 3. In such embodiments, the second database 9.2 may be arranged to transmit data to the first database 9.1 where said data comprises a plurality of historic vehicle velocity profiles associated with respective geographical segments 4.1-4.4 of the road 7. Such transmitted data may be a data-package comprising data covering a particular stretch of the road 7 such as a probable path of the host vehicle. For example, the data-package may comprise data covering a stretch of the road to a next road junction, covering a stretch of the road corresponding to a stretch of the road heading towards an inputted destination in a navigational system, or covering a stretch of the road having a predetermined length or data size of said data-package. By transmitting data from the second database 9.2 to the first database 9.1 in the form of data-packages, the vehicle velocity control arrangement 1 may utilize historic vehicle velocity profiles from a centralized storage facility even in areas where a data-connection between the first and the second database 9.1, 9.2 is uncertain or cannot be guaranteed at all times.

The geographical segments 4.1-4.4 of the road 7 may be an intended subdivision of the road 7 into geographical segments 4.1-4.4 of the road 7 having a certain length, i.e. a certain extension in an intended direction of travel of the road 7. Such certain length may correspond to a length of approximately 3 meters. Further, such certain length may be variable, for example in the sense that geographical segments 4.1-4.4 of the road 7 comprising obstacles or other features leading to reduced historical velocity profiles such as crests etc. may be shorter in length than a segment of the road 7 where more even historical velocity profiles occur such as a segment of a highway. An obstacle in the form of a road bump 17 is illustrated in Fig. 1. Thus, according to some embodiments, the geographical road segment 4.3 comprising the road bump 17 illustrated in Fig. 1 may be shorter in length than a geographical road segment 4.4 which do not comprise an obstacle. Further, according to some embodiments, the geographical segments of the road 7 may have infinitesimal length. Thus, the geographical segments of the road 7 may be defined by a continuous function.

The processing unit 11 may comprise one or more processors arranged to compare the position signal with the data representative of the geographical road segments 4.1-4.4 to determine from the database 9.1, 9.2 a current geographical road segment 4.1 and to process the historic vehicle velocity profiles associated with the current geographical road segment 4.1 to generate a host vehicle velocity control signal therefrom.

The vehicle velocity regulator 13 may comprise means to regulate power of a powering unit of the host vehicle 3. Such a host vehicle powering unit may for example be a combustion engine, an electric motor or a combination thereof. In addition, the vehicle velocity regulator 13 may comprise means for regulating brakes of the host vehicle 3.

The generated host vehicle velocity control signal may comprise one or more set point host vehicle velocities and the vehicle velocity regulator 13 may be arranged to regulate vehicle velocity of the host vehicle 3 towards the one or more set point host vehicle velocities. Such a set point host vehicle velocity may be a desired host vehicle velocity further down the road or a desired host vehicle velocity within a desired time.

The processing unit 11 may further be arranged to calculate a weighted average of the historic velocity profiles associated with the current geographical road segment (4.1) and generate a host vehicle velocity control signal representative of said calculated weighted average. As an alternative, the processing unit 11 may further be arranged to select a subset of the historic velocity profiles associated with the current geographical road segment (4.1) and generate a host vehicle velocity control signal representative of said selected subset. Such a host vehicle velocity control signal may be generated by calculating a weighted average of the historic velocity profiles associated with said selected subset. The subset may be selected in dependence of the identity of the host vehicle driver, time of the day, time of the year, weather conditions, illumination condition, and/or vehicle tire to road friction values. For example, in embodiments where the subset is selected in dependence of the identity of the host vehicle driver, and an identity of a driver preferring an aggressive driving behaviour is detected, the subset comprising higher historic vehicle velocity profiles may be selected. As a result, the vehicle velocity regulator 13 will regulate vehicle velocity of the host vehicle 3 to a higher velocity with higher vehicle accelerations, both in terms of acceleration and deceleration of the host vehicle 3 as compared to when of a driver preferring a calmer driving behaviour is detected.

In contrast, according to such embodiments, in case an identity of a driver preferring a calmer driving behaviour is detected, for example an elderly person, a subset comprising lower historic vehicle velocity profiles may be selected. As a result, the vehicle velocity regulator 13 will regulate vehicle velocity of the host vehicle 3 to a lower velocity with lower vehicle accelerations, both in terms of acceleration and deceleration of the host vehicle 3. Due to these features, a velocity control arrangement is provided having an improved ability to regulate host vehicle velocity to match an intention of the vehicle driver. For the purpose of identifying a host vehicle driver, the vehicle velocity control arrangement 1 may comprise an input unit configured to detect an identity of the host vehicle driver. Such an input unit may comprise a reader unit arranged to detect an identity of a car key, a card reading unit, or a camera unit arranged to capture one or more images of a host vehicle driver and compare these with stored images of previous host vehicle drivers in order to identify the current host vehicle driver.

According to some embodiments, the database 9.1, 9.2 further comprises additional information associated with the respective historic vehicle velocity profiles, comprising at least one of a time of day, time of year, weather conditions, illumination condition, vehicle tire to road friction values, and the processing unit 11 further is arranged to select a subset based on said additional information. In such embodiments, the time of the day, the time of the year, the illumination condition, the vehicle tire to road friction values and/or weather conditions may be associated with the respective historic vehicle velocity profiles and be representative of the time of the day, the time of the year, the illumination condition, the vehicle tire to road friction values and/or weather conditions being present when the respective historic vehicle velocity profiles where recorded and saved to the database 9.1, 9.2. Thereby, at a subsequent event, a processing unit 11 of a vehicle velocity control arrangement 1 may be arranged to compare a current additional information such as a current time of the day, a current time of the year, a current weather condition, a current illumination condition, current vehicle tire to road friction values with those having been stored in the database 9.1, 9.2 and on the basis thereof, select a subset of the historic velocity profiles. According to such embodiments, on the basis of current additional information, a subset of the historic velocity profiles may be selected with similar additional information. By the processing unit 11 further being arranged to select a subset based on said such additional information, a vehicle velocity control arrangement 1 is provided having an improved ability to regulate host vehicle velocity to match a driving situation, to match an intention of a vehicle driver, and/or to match a safe vehicle velocity.

According to some embodiments, the vehicle velocity control arrangement 1 further comprises a vehicle velocity generating unit 19 arranged to generate velocity data representative of a current vehicle velocity of the host vehicle 3, and where the vehicle velocity regulator 13 has an active state in which the vehicle velocity regulator 13 regulates vehicle velocity of the host vehicle 3 velocity using the generated host vehicle velocity control signal and an inactive state in which no regulation is performed, and where the processing unit 11 further is arranged to save the velocity data and an estimated position of the host vehicle 3 to the database 9.1, 9.2 when the vehicle velocity regulator 13 is in the inactive state.

Thus, according to such embodiments, the processing unit 11 will further be arranged to only save the velocity data and an estimated position of the host vehicle 3 to the database 9.1, 9.2 when the vehicle velocity regulator 13 is in the inactive state. As a result, the database 9.1, 9.2 will comprise data representative of historic vehicle velocity profiles of the host vehicle 3 in cases where the vehicle velocity of the host vehicle 3 is regulated by a human driver. As a result, at a subsequent event, the vehicle velocity control arrangement 1 of the host vehicle 3 and/or another vehicle, using the data of such a database 9.1, 9.2, will have an improved ability to regulate host vehicle velocity to match a driving situation, to match an intention of a vehicle driver, and/or to match a safe vehicle velocity.

According to some embodiments, the vehicle velocity control arrangement 1 further comprises a clock unit 21 arranged to generate time data representative of a current time and where the processing unit 11 further is arranged to save the generated time data together with the velocity data and the estimated position of the host vehicle 3. As a result, the database 9.1, 9.2 will comprise time data representative of a time when respective historic vehicle velocity profiles are recorded and saved to the database 9.1, 9.2. Thereby, the processing unit 11 will, based on a current time, be arranged to select a subset based on said time data. Accordingly, the processing unit 11 will be arranged to compare said time-data associated with historic vehicle velocity profiles with a current time and to select a subset based of historic vehicle velocity profiles being associated with a time data similar to a current time. The comparison will be performed with respect to a time of a day and/or a time of the year. Accordingly, in such embodiments, a vehicle velocity control arrangement 1 is provided being capable of regulating vehicle velocity of a host vehicle 3 in such a way that it matches a velocity of previous vehicles having been driven on a particular stretch of a road at a given time of the day or a time of the year. Thereby, a velocity control arrangement is provided having an improved ability to regulate host vehicle velocity to match a driving situation, to match an intention of a vehicle driver, and/or to match a safe vehicle velocity.

According to some embodiments, the vehicle velocity control arrangement 1 further comprises an environmental data generating unit 23 arranged to generate environmental data representative of at least one of a current weather condition a current illumination condition and current host vehicle 3 tire to road friction values where the processing unit 11 further is arranged to save the environmental data together with the velocity data and the estimated position of the host vehicle 3. The environmental data generating unit 23 may comprise a rain sensor unit, an external temperature data generating unit, an ambient light sensor, a friction estimating unit, an Electronic Stability Control unit, or a receiver unit arranged to receive a signal representative of environmental data from an environmental data service provider. Further, such environmental data may be received by the environmental data generating unit 23 from the external database 9.2.

Thus, the processing unit 11 will in some embodiments described herein be arranged to save such the environmental data together with the velocity data and the estimated position of the host vehicle 3 to the database 9.1, 9.2. Thereby, at a subsequent event, a processing unit 11 of a vehicle velocity control arrangement 1 will be arranged to compare a current environmental data with those having been stored in the database 9.1, 9.2 and on the basis thereof, select a subset of the historic velocity profiles. Thereby, a velocity control arrangement is provided having an improved ability to regulate host vehicle velocity to match a driving situation, to match an intention of a vehicle driver, and/or to match a safe vehicle velocity.

According to some embodiments, the vehicle velocity control arrangement 1 further comprises an adaptive cruise control arrangement 25, comprising a distance measuring unit 27 arranged to measure a distance 29 to a preceding vehicle 30. According to such embodiments, the adaptive cruise control arrangement 25 is arranged to generate a first velocity value on the basis of at least the measured a distance 29, where the processing unit 11 further is arranged to process the historic velocity profiles associated with the current geographical road segment and to generate a second velocity value therefrom. Further, according to such embodiments, the processing unit 11 is arranged to compare the generated first and second velocity values to determine the lowest of the first and the second velocity values and to generate the host vehicle velocity control signal therefrom.

Consequently, according to such embodiments, the vehicle velocity control arrangement 1 is arranged to regulate vehicle velocity of the host vehicle 3 using a host vehicle velocity control signal being generated from the lowest of the first and the second velocity values. Thereby, a vehicle velocity control arrangement 1 is provided having an improved ability to regulate host vehicle velocity to match a driving situation, to match an intention of a vehicle driver, and/or to match a safe vehicle velocity.

For example, a vehicle velocity control arrangement 1 according to such embodiments will generate a first velocity value on the basis of at least a measured distance 29 from the hosting vehicle 3 to the preceding vehicle 30. Also, such a vehicle velocity control arrangement 1 will generate a second velocity value on the basis of the historic velocity profiles associated with a current geographical road segment. In Fig. 1, a segment 4.3 is illustrated as comprising a road bump 17. It is likely that data representative of a plurality of historic vehicle velocity profiles associated with the geographical road segment 4.3 comprising the road bump 17 as well the geographical road segments 4.1, 4.2 before the geographical road segment 4.3 will have reduced historic vehicle velocity profiles since it is likely that vehicle drivers who has driven vehicles on the particular stretch of the road 7 have reduced the vehicle velocity before the road bump 17 and at the road bump 17. Thereby, the vehicle velocity control arrangement 1 of the vehicle 3 illustrated in Fig. 1 will regulate velocity of the host vehicle 3 using a host vehicle velocity control signal being generated from the second velocity value as the host vehicle 3 approaches the road bump 17. As a result, the vehicle velocity control arrangement 1 will admit an increased distance 29 to the preceding vehicle 30 and a vehicle velocity control arrangement 1 is provided having an improved ability to regulate host vehicle velocity to match a driving situation, to match an intention of a vehicle driver, and/or to match a safe vehicle velocity. As a further result, a vehicle velocity control arrangement 1 is provided having an improved ability to regulate host vehicle velocity in a city environment.

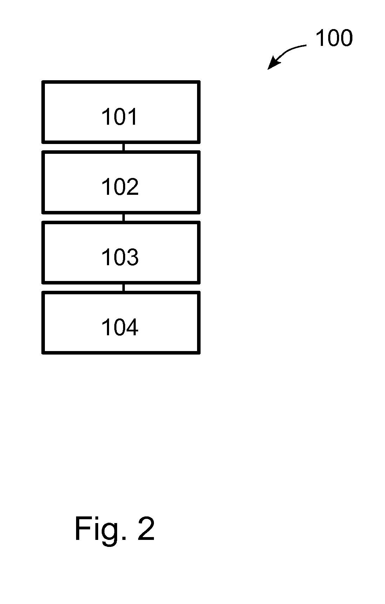

Fig. 2 illustrates a method of controlling vehicle velocity of a host vehicle using a vehicle velocity control arrangement comprising a position generating unit, a database comprising data representative of a plurality of historic vehicle velocity profiles associated with respective geographical segments of the road, a processing unit, and a vehicle velocity regulator, the method comprising;
- generating 101 a position signal indicating an estimated position of the host vehicle on a road, using the position generating unit, and
- comparing 102 the position signal with the data representative of the geographical road segments to determine from the database a current geographical road segment, and
- processing 103 the historic velocity profiles associated with the current geographical road segment to generate a host vehicle velocity control signal therefrom, using the processing unit, and
- regulating 104 the host vehicle velocity using the host vehicle velocity regulator 13 using the generated host vehicle velocity control signal.

In all embodiments described herein, the database 9.1, 9.2 may comprise data representative of a heading direction together with the data representative of a plurality of historic vehicle velocity profiles associated with respective geographical road segments 4.1-4.4. Likewise, the processing unit 11 may further be arranged to save the heading direction with the velocity data and an estimated position of the host vehicle to the database 9.1, 9.2 when the vehicle velocity regulator 13 is in the inactive state. The heading direction may be ascertained by comparing two or more estimated positions of the host vehicle 3.

## Claims

1. A vehicle velocity control arrangement (1) configured to control vehicle velocity of a host vehicle (3) comprising;
- a position generating unit (5) arranged to generate a position signal indicating an estimated position of the host vehicle (3) on a road (7),
- a database (9.1, 9.2) comprising data representative of a plurality of historic vehicle velocity profiles associated with respective geographical segments (4.1-4.4) of the road (7),
- a processing unit (11) arranged to compare the position signal with the data representative of the geographical road segments (4.1-4.4) to determine from the database (9.1, 9.2) a current geographical road segment (4.1) and to process the historic vehicle velocity profiles associated with the current geographical road segment (4.1) to generate a host vehicle velocity control signal therefrom, and
- a vehicle velocity regulator (13) arranged to regulate vehicle velocity of the host vehicle (3) using the generated host vehicle velocity control signal.

2. The vehicle velocity control arrangement (1) according to claim 1 where the processing unit (11) further is arranged to calculate a weighted average of the historic velocity profiles associated with the current geographical road segment (4.1) and generate a host vehicle velocity control signal representative of said calculated weighted average.

3. The vehicle velocity control arrangement (1) according to claim 1 where the processing unit (11) further is arranged to select a subset of the historic velocity profiles associated with the current geographical road segment (4.1) and generate a host vehicle velocity control signal representative of said selected subset.

4. The vehicle velocity control arrangement (1) according to claim 3 where the database (9.1, 9.2) further comprises additional information associated with the respective historic vehicle velocity profiles, comprising at least one of a time of day, time of year, weather conditions, illumination condition, vehicle tire to road friction values, and the processing unit (11) further is arranged to select a subset based on said additional information.

5. The vehicle velocity control arrangement (1) according to any one of the preceding claims further comprising a vehicle velocity generating unit (19) arranged to generate velocity data representative of a current vehicle velocity of the host vehicle (3), where the vehicle velocity regulator (13) has an active state in which the vehicle velocity regulator (13) regulates vehicle velocity of the host vehicle (3) using the generated host vehicle velocity control signal and an inactive state in which no regulation is performed, and where the processing unit (11) further is arranged to save the velocity data and an estimated position of the host vehicle (3) to the database (9.1, 9.2) when the vehicle velocity regulator (13) is in the inactive state.

6. The vehicle velocity control arrangement (1) according to claim 5 further comprising a clock unit (21) arranged to generate time data representative of a current time and where the processing unit (11) further is arranged to save the generated time data together with the velocity data and the estimated position of the host vehicle (3).

7. The vehicle velocity control arrangement (1) according to claim 5 or 6 further comprising an environmental data generating unit (23) arranged to generate environmental data representative of at least one of a current weather condition a current illumination condition and current host vehicle tire to road friction values and where the processing unit (11) further is arranged to save the environmental data together with the velocity data and the estimated position of the host vehicle (3).

8. The vehicle velocity control arrangement (1) according to any one of the preceding claims further comprising an adaptive cruise control arrangement (25) comprising a distance measuring unit (27) arranged to measure a distance (29) to a preceding vehicle (30) where the adaptive cruise control arrangement (25) is arranged to generate a first velocity value on the basis of at least the measured a distance (29), where the processing unit (11) further is arranged to process the historic velocity profiles associated with the current geographical road segment (4.1) and to generate a second velocity value therefrom, and where the processing unit (11) is arranged to compare the generated first and second velocity values to determine the lowest of the first and the second velocity values and to generate the host vehicle velocity control signal therefrom.

9. The vehicle velocity control arrangement (1) according to any one of the preceding claims where the database (9.1) is arranged in the host vehicle (3).

10. The vehicle velocity control arrangement (1) according to any one of the claims 1-8 where the arrangement (1) further comprises a communication unit (15) and where the database (9.2) is arranged external to the host vehicle (3) and where the communication unit (15) is arranged to communicate with the external database (9.2).

11. A vehicle (3) comprising a vehicle velocity control arrangement (1) according to any one of the claims 1-10

12. A method of controlling vehicle velocity of a host vehicle (3) using a vehicle velocity control arrangement (1) comprising a position generating unit (5), a database (9.1, 9.2) comprising data representative of a plurality of historic vehicle velocity profiles associated with respective geographical segments (4.1-4.4) of a road (7), a processing unit (11), and a vehicle velocity regulator (13), the method comprising;
- generating (101) a position signal indicating an estimated position of the host vehicle (3) on the road (7), using the position generating unit (5), and
- comparing (102) the position signal with the data representative of the geographical road segments (4.1-4.4) to determine from the database (9.1, 9.2) a current geographical road segment (4.1), and
- processing (103) the historic velocity profiles associated with the current geographical road segment (4.1) to generate a host vehicle velocity control signal therefrom, using the processing unit (11), and
- regulating (104) vehicle velocity of the host vehicle (3) using the host vehicle velocity regulator (13) using the generated host vehicle velocity control signal.
